# EUROPEAN PATENT APPLICATION

(11) **EP 4 671 651 A1**
(43) Date of publication of application: **31.12.2025**
(21) Application number: 24184273.1
(22) Date of filing: 25.06.2024
(51) Int. Cl.: F26B 1/00

(54) **METHOD AND SYSTEM FOR HANDLING RESIDUAL PRODUCT FROM PLANT-BASED FOOD STUFF PRODUCTION**

(71) Applicant: Livoo AB, 572 36 Oskarshamn (SE)
(72) Inventor: Ekstrand, Stefan, 352 42 Växjö (SE); Rafidi, Nabil Elias, 35 261 Växjö (SE)
(74) Representative: Groth & Co. KB

(57) **Abstract**

The present invention relates to a system and method of handling residual product from plant-based food stuff production is provided. The method (200) comprises the steps of receiving residual product from a plant-based food stuff production facility (20), the residual product comprising 15-50% solid substances and 50-85% water; supplying the received residual product to a buffer tank (10) by inputting the residual product into a tank chamber (14) of the buffer tank through a residual product inlet (1); supplying heat to the residual product in the tank chamber (14) to keep the residual product at a temperature between 65-95°C; mixing the residual product in the tank chamber (14) by means of one or more mixing blades (7, 9, 13); extracting residual product from the buffer tank (10) through a tank outlet (2); and supplying the extracted residual product to a residual product dryer (30) configured to dry the residual product.

## Description

### Technical Field

The present disclosure relates to a method and system for handling residual product from a plant-based food stuff production facility, and especially residual product to be dried and used for humans.

### Background

During the production of plant-based food stuff, such as oat drink, a side stream or a residual product is produced which is composed of solid substances and a high water level, which is also called oat-okara. Although the oat-okara has a high nutrition value, it has a low commercial value. In many cases this residual product is considered as a waste material, and in some the residual product can be used as animal food or as a low value biomass fuel due to its high-water content. However, by drying the residual material using a drying system, the dried product can be used as an ingredient for human use. This has led to the establishment of a commercial market for dried residual products from e.g. oat drink production and consequently, the product market value - after drying - increased. Oat-okara is not the only side stream that has high nutrition but low commercial value, other side stream can be produced from, for example, a soya drink and from breweries - spend brewery grains - SBG, or other plant-based food stuff production.

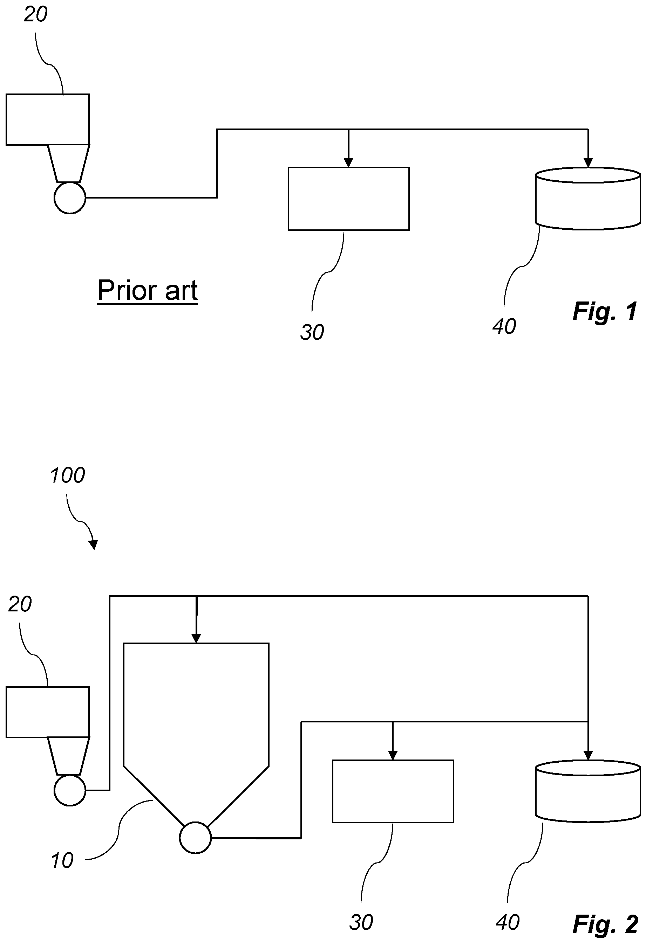

Although technology for drying these residual products (okara) has been commissioned and used in recent years, there are still difficulties in handling the residual products. This is due to the difficult physical nature of the wet residual products. It is a highly sticky and viscous non-Newtonian fluid material with solid fibers. To get the residual product from the food stuff production facility, where they are output, to the dryer requires at least pumping. Fig.1 illustrates an existing setup for the drying of wet residual product such as oat okara. The residual product (okara) is produced from the production facility and pumped directly to the dryer. The reject tank receives the residual product that is not useful for drying, for example, residual product with excessive water content produced during the start-up of the production. In addition, it may receive useful residual product in situations when the dryer is not in operation.

There are solutions for pumping wet residual product through pipes for relatively long distances (50 - 100 m). However, many other technical challenges are persisted regarding handling of these wet residual product (okara). Sometimes the dryer is not in operation while the okara is being produced and therefore, buffer storing is required. Furthermore, in some cases the drying facility is not in the same location as the okara production facility and therefore, transporting the okara is required. All these handling processes of residual product such as, storing, transporting, drying etc. are required while keeping in mind the hygienic handling of the residual product to avoid microorganism or toxin contamination, which otherwise can prevent the residual product from being used for human use.

Consequently, there is a need for a way of handling the residual product in an efficient and flexible way, while observing any hygienic requirements.

### Summary

It is an object of the present invention to provide an improved solution that alleviates the mentioned drawbacks with present devices. Furthermore, it is an object to provide a method of handling residual products from plant-based food stuff production processes that is efficient, flexible and hygienic.

The invention is defined by the appended independent claims, with embodiments being set forth in the appended dependent claims, in the following description and in the drawings.

According to a first aspect of the invention a method of handling residual product from plant-based food stuff production is provided. The method comprises the steps of receiving residual product from a plant-based food stuff production facility, the residual product comprising 15-50% solid substances and 50-85% water; supplying the received residual product to a buffer tank by inputting the residual product into a tank chamber of the buffer tank through a residual product inlet; supplying heat to the residual product in the tank chamber to keep the residual product at a temperature between 65-95°C; mixing the residual product in the tank chamber by means of one or more mixing blades; extracting residual product from the buffer tank through a tank outlet; and supplying the extracted residual product to a residual product dryer configured to dry the residual product.

It is important when handling material intended to be used for food to humans, that the material is treated correctly throughout the whole process. When taking care of residual product from plant-based food stuff production, it is important to have control of how the residual product is taken care of all the way to the dryer. When the residual product has been dried, the handling thereof may be easier. In order to reduce the amount of residual product that may need to go to waste in a reject tank or the like due to it not being possible to dry the residual product directly when being received from the food stuff production, the buffer tank may be used.

The residual product may not be put in an ordinary storage waiting for capacity in the dryer. Then microorganism contamination would cause the residual product to be wasted. Due to the high water content of the residual product, it may be sensitive to microorganism contamination. By using a buffer tank as in the present invention, the necessary means are provided that may enable buffer storage of the residual product in the buffer tank up to one or several weeks. The supply of heat in combination with the mixing of the residual product may provide the residual product to be kept safe and in condition for subsequent drying.

The tank chamber may have a substantially cylindrical upper portion, and a lower end portion. The lower portion may be formed as a lower end portion of the upper portion. The lower end portion may be funnel shaped, conical, flat or dish shaped. The tank outlet may be arranged in the lower end portion. The tank outlet may be arranged at a lowest portion of the lower end portion. Such lowest portion may be at a lower central location of the funnel shaped or conical lower end portion. The inner walls of the lower end portion may be inclined towards the location of the tank outlet.

The one or more mixing blades may comprise at least one static blade and at least one rotating blade arranged in the tank chamber. Such mixing arrangement may provide the necessary mixing operation in order to keep the residual product in the desired shape and/or to make the residual product more homogeneous in terms of water content and temperature. The rotating blade may be arranged on a rotating shaft. The rotating shaft may be arranged at a central position in the substantially cylindrical tank chamber. The rotating shaft may coincide with a central axis of the substantially cylindrical tank chamber. More than one, such as two or three, rotating blades may be arranged to the rotating shaft. The rotating blades may interact with the static blade to provide the mixing of the residual product. The static blade may be arranged to a static shaft. The static shaft may be arranged in parallel to the rotating shaft, at a distance therefrom. The distance between the two shafts may be larger than a length of the rotating and/or static blades. More than one, such as two or three, static blades may be arranged to the static shaft. There may be more than one, such as two, three or four, static shafts arranged in the tank chamber, each supporting at least one static blade. The at least one static blade may extend from the static shaft in direction towards the rotating shaft.

The at least one rotating blade may comprise a scraper configured to move along an inner surface of the chamber. The scraper may be arranged to the rotating shaft. The scraper may have a shape corresponding to an inner surface of the tank chamber. The tank chamber may have a substantially cylindrical upper portion, and a funnel shaped, conical shaped, flat or dish shaped lower portion. The lower portion may be formed as a lower end portion of the upper portion. The tank outlet may be arranged at a lower central location of the lower end portion. The inner surface of the lower portion may be inclined towards the location of the tank outlet. The scraper may extend along at least portions of the inner surfaces of both the upper portion and the lower portion of the tank chamber. The scraper may comprise a bend at a position corresponding to the transition from the upper portion to the lower portion of the tank chamber. The scraper may be attached to the rotating shaft via a connection arm attached to the scraper and to the rotating shaft. Alternatively, the scraper may be directly, or via a connection arm, attached to a rotating blade, which in turn is attached to the rotating shaft. The scraper may have the purpose of preventing residual product from getting stuck on the inner surface of the tank chamber. The scraper may provide that all residual product is properly mixed.

The heating means may comprise a heat material inlet and the step of supplying heat comprises supplying hot steam into the tank chamber through the heat material inlet. The hot steam may provide that the residual product and the environment in the tank chamber are kept at a desired level in terms of temperature. The hot steam may provide an autoclaving treatment of the residual product. This may maintain the residual product in a healthy condition, suitable for human use.

The heating means may comprise a heating jacket arranged to the tank chamber and/or to or in connection with the residual product inlet, and the step of supplying heat comprises supplying heat to the residual product by means of the heating jacket. Instead of or in addition to the hot steam heating in the tank chamber, a heating jacket may be provided to heat the residual product in the tank chamber. The heating jacket may be arranged to a pipe upstream of the residual product inlet, in order to heat the residual product prior to being input into the tank chamber.

The heating means may comprise a heat exchanger and the step of supplying heat comprises heating the residual product upstream of the tank chamber by means of the heat exchanger. The heat exchanger may be arranged to a pipe upstream of the residual product inlet, to heat the residual product prior to being input into the tank chamber.

The method may further comprise a step of heating the residual product to between 120-130°C upstream the tank chamber. The residual product is in the tank chamber maintained at a temperature of 65-95°C. The residual product may, prior to being input into the tank chamber, be heated to between 120-130°C in order to treat (e.g. sterilize) the residual product. The further treatment may improve the time the residual product may maintain in a healthy state in the buffer tank. This heating may be provided by for instance autoclaving (e.g. by steam), hot water, microwave.

The method may further comprise a step of supplying compressed air into the tank chamber through a compressed air inlet. The buffer tank may comprise a compressed air inlet into the tank chamber. Compressed air may be inserted into the tank chamber, at least during extraction of residual product through the tank outlet. The flowability of the residual product may be improved by adding compressed air into the tank chamber during extraction. The compressed air inlet may be arranged at a top of the tank chamber. The compressed air may be supplied to provide a pressure inside the tank chamber of 0.1-0.5 bar. Compressed air may be supplied to the tank chamber as pulses of compressed air through the compressed air inlet. The compressed air inlet may comprise one or more choked nozzles configured to supply pulses of compressed air. The pulses may be supplied as high-speed pulses of compressed air. Pulses of compressed air may be efficient in moving the residual product during extraction thereof through the tank outlet.

The method may further comprise a step of transporting the residual product through a pipeline between the residual product outlet on the buffer tank and the residual product dryer. When the dryer is capable of receiving residual product for drying, residual product may be extracted from the buffer tank and fed to the dryer. In alternative embodiments, the residual product may be transported by a transporting means, such as a transporting vehicle or a conveyor, from the tank outlet of the buffer tank to the dryer.

According to a second aspect of the invention, a residual product handling system for handling residual product from plant-based food stuff production is provided. The residual product handling system comprises a buffer tank configured to receive residual product from a plant-based food stuff production facility and a residual product dryer configured to dry the residual product extracted from the buffer tank. The buffer tank comprises a tank chamber; a residual product inlet for receiving residual product of a plant-based food stuff production to the tank chamber; a residual product outlet for extracting residual product from the buffer tank; a heating means configured to supply heat to the residual product for heating the residual product to between 65-95°C; and one or more mixing blades configured to mix the residual product together in the tank chamber.

The one or more mixing blades may comprise at least one static blade and at least one rotating blade arranged in the tank chamber.

The at least one rotating blade may comprise a scraper configured to move along an inner surface of the chamber.

The heat means may comprise a heat material inlet configured to supply hot steam into the tank chamber.

The heating means may comprise a heating jacket arranged to the tank chamber and/or to or in connection with the residual product inlet.

The heating means may comprise a heat exchanger configured to heat the residual product upstream of the tank chamber.

The residual product handling system may further comprise air supplying means to supply compressed air into the tank chamber through a compressed air inlet. The air supplying means may be configured to provide a pressure inside the tank chamber of 0.1-0.5 bar.

The heating means may be configured to heat the residual product to between 120-130°C upstream the tank chamber, and may be configured to supply heat to the residual product in the tank chamber to maintain the temperature between 65-95°C.

The residual product handling system may further comprise a pipeline between the residual product outlet on the buffer tank and the residual product dryer.

The features disclosed above in relation to the first aspect of the invention in form of a method of handling residual product, and the function thereof, are equally applicable to the residual product handling system.

### Brief Description of the Drawings

The invention will in the following be described in more detail with reference to the enclosed drawings, wherein:
Fig. 1 shows a schematic block scheme of a known system.
Fig. 2 shows a schematic block scheme of a system according to an embodiment of the invention.
Fig. 3 shows a side view of a buffer tank according to an embodiment of the invention.
Fig. 4 shows a schematic block scheme of a system according to an embodiment of the invention.
Fig. 5 shows a schematic block scheme of a system according to an embodiment of the invention.
Fig. 6 shows a flowchart of a method according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

Fig. 2 illustrates a system 100 according to an embodiment of the invention, which system 100 is set up for drying wet residual product by using a buffer tank 10, by which the amount of wasted and rejected residual product may be reduced. There may be one or a plurality of buffer tanks 10, depending on the size of the plant. The residual product is received from a food stuff production facility 20. The residual product is to be transported to a dryer 30 configured to dry the residual product. The dried residual product may enable an easier and more efficient handling, and may be used for human food stuff. The system 100 further comprises a reject tank 40 configured to receive waste residual product, for instance residual product received from a start-up process of the food stuff production and which thereby may not be suitable to provide to the dryer 30.

By having the buffer tank 10, less residual product may be needed to be transported to the reject tank 40 since the buffer tank 10 may receive residual product when for instance the dryer 30 is not in operation, or if an amount of residual product is received beyond the capacity of the dryer 30. The reject tank 40 may receive residual product transported directly from the food production facility 20, or from the buffer tank 10. The residual product received from the food stuff production facility 20 may be residual product produced during a start-up process, or due to a capacity limit of the buffer tank 10 having been reached. The reject tank 40 may receive residual product from the buffer tank 10 in case the amount of residual product in the buffer tank 10 needs to be lowered, and the dryer 30 is not capable of taking care of all residual product.

The food stuff production facility 20 may be a plant-based food stuff production facility, for instance for producing oat drink, soy drink, other plant-based drink, or a brewery. The residual product may thereby be oat okara, soy okara, spent brewery grains, etc.

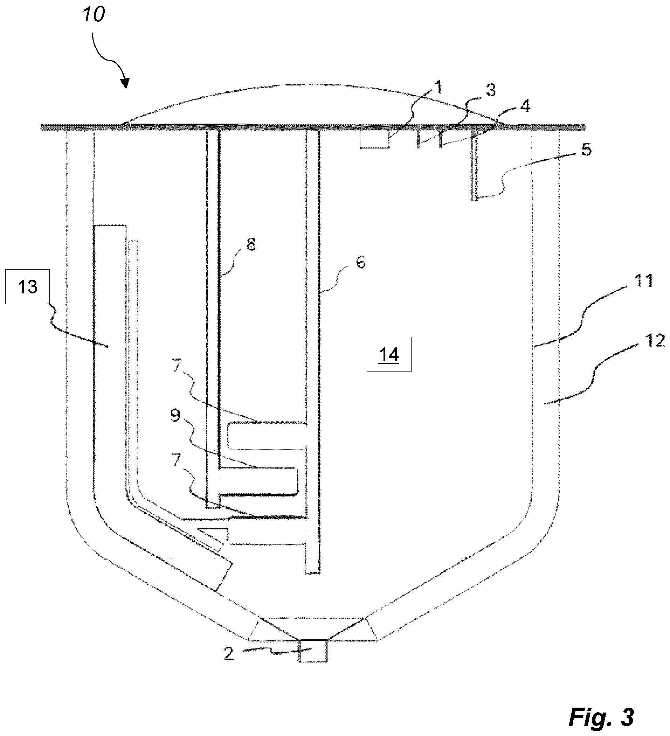

Fig. 3 illustrates a buffer tank 10 according to an embodiment. The buffer tank 10 may be used to temporarily store the residual product for an uphold time. This may be, for example, in case the food stuff/okara production is ongoing while the dryer 20 is not in operation. In this case, the buffer tank 10 may receive and keep the residual product.

The buffer tank 10 comprises a tank chamber 14. The residual product is received into the tank chamber 14 via a residual product inlet 1. The residual product inlet 1 may be arranged at a top of the tank chamber 14.

Unlike many other fluids, the residual product may be a highly sticky and viscous non-Newtonian fluid material with solid fibers. The shear thinning behavior of the residual product implies that the flowability increases, or the viscosity decreases, with the rate of shear strain - or with the amount of force/stress applied to it.

Inside the tank chamber 14, there is provided means for mixing the residual product, for instance by one or more mixing blades. In the illustrated embodiment, the mixing is provided by a static mixing blade 9 arranged on a static shaft 8, and at least one rotating mixing blade 7 arranged on a rotating shaft 6. The rotating shaft 6 may be arranged coincide with a center axis of the substantially cylindrical tank chamber 14. There may be one, two, or more, for instance up to five, rotating mixing blade 7 arranged to the rotating shaft 6, which may interact with the static mixing blade 9 to mix the residual product. The number of rotating mixing blades 7 may depend on the size of the buffer tank 10. The combination of the static mixing blade 9 and the rotating mixing blade 7 may ensure good mixing of the residual product and higher rate of shear strain.

The number of static mixing blades 9 may also vary between 1 and 5 depending on the size of the buffer tank 10. With the static mixing blade, it may be prevented that the motion of the residual product in the tank may be a pure rotational translation of residual product in big lumps, meaning low relative velocity between the residual product parts and consequently less mixing. The mixing may not only reduce the viscosity of the residual product but also ensures homogeneous temperature of the residual product.

The buffer tank 10 may further comprise at least one scraper 13. The scraper 13 may be connected to the rotating shaft 6 directly or via a rotating mixing blade 7. The scraper 13 may be configured to prevent the adhesion of residual product to the inner walls of the tank chamber 14. The scraper 13 may be configured to extend, at least in part, in parallel with, and in contact with, the inner walls of the tank chamber 14. The residual product may thereby be prevented from adhering to the inner walls, and instead be mixed within the tank chamber 14.

The residual product may be softened by adding heat or increasing the temperature of the residual product. Therefore, the buffer tank 10 may comprise features that increase the flowability of the residual product, making the residual product flow easier, for instance through the buffer tank outlet 2. The residual product is fed to the tank chamber 14 through the tank inlet 1. Heating media may be added to the tank chamber 14 through at least one heating media inlet 3, to heat the residual product to the desired temperature that protect the residual product from e.g. microorganism contamination. The desired temperature varies between 65 - 95°C, depending on the uphold time and the growth rate of microorganisms. Another reason for heating the residual product may be that the viscosity decreases with temperature for some types of residual product. The heating media to be added to the tank chamber 14 through the heating media inlet 3 may be hot steam. The heating media may be added from the top or the bottom of the tank. The advantages of adding the heating media from the bottom may be a higher heat transfer coefficient between the heating media and the residual product. By adding the heating media at the top of the tank chamber 14, it may be easier to avoid interference between the heating media inlet 3 and the residual product, the rotating mixing blades 7 and/or the scraper 13.

An alternative or additional way to add force or stress on the residual product to reduce its viscosity and increase its flowability may be to add compressed air into the tank chamber 14. The buffer tank 10 may comprise a compressed air inlet 4 configured to supply compressed air into the tank chamber 14. The compressed air may, at least during extracting of the residual product through the tank outlet 2, improve the flowability of the residual product through the tank outlet 2, by adding slight pressure to the tank chamber 14. A pressure of between 0.1 - 0.5 bar may be provided by the compressed air. Compressed air may alternatively be supplied to the tank chamber 14 as pulses through the compressed air inlet 4 comprising one or more choked nozzles.

The tank chamber 14 may be provided with thermal insulation material 12. The thermal insulation material 12 may constitute or be provided as part of the walls of the buffer tank 10. The thermal insulation material 12 may help in keeping the residual at the desired temperature during storage of the residual product in the buffer tank 10.

As an alternative or addition to the supply of heating material to keep the temperature of the residual product at a desired level and prevent it from decreasing in case of long uphold time in the buffer tank 10, the buffer tank 10 may comprise trace heating wires 11. The trace heating wires 11 may be arranged on or in at least a portion of the side walls of the tank chamber 14. The trace heating wires 11 may be electrical heating wires configured to supply heat to the tank chamber 14 and the residual product therein.

For cleaning and sanitizing, the buffer tank may comprise at least one cleaning nozzle 5 mounted in the tank chamber 14.

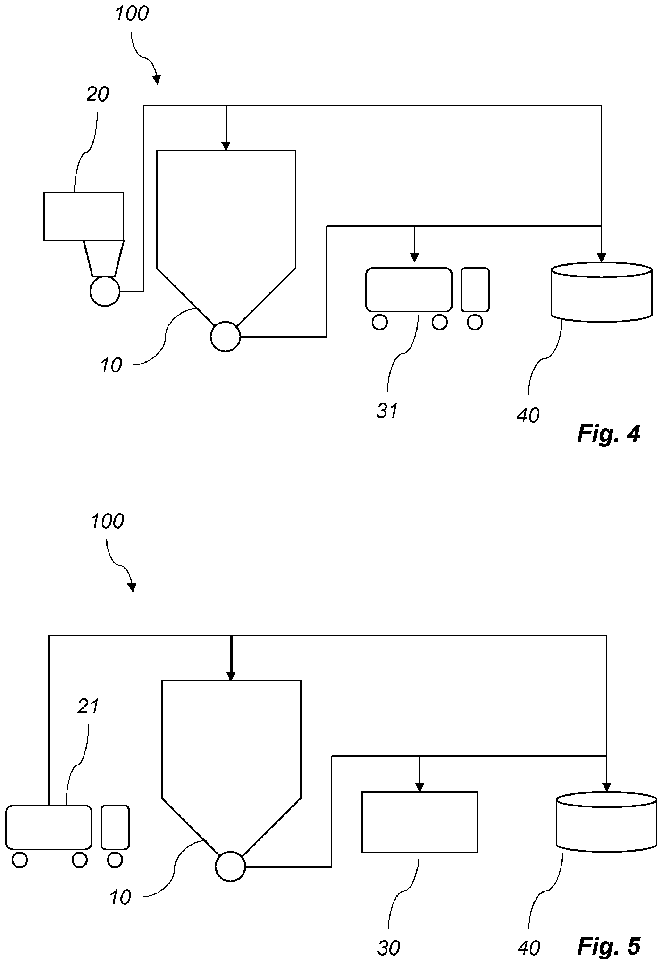

Other embodiments of the system 100 are illustrated in figs. 4 and 5. In fig. 4, the dryer 30 may be located at a different location than the food stuff production facility 20, the buffer tank 10, and/or the reject tank 40. The residual product to be dried in the dryer 30 may need to be transported by a transporting means 31, such as a transporting container transported by for instance a vehicle, in order to reach the dryer 30. The buffer tank 10 may then be used to uphold the residual product received from the production facility 20 until transportation of the residual product to the dryer 30 is available.

In fig. 5, the system 100 comprises a transportation means 21, such as a transporting container transported by for instance a vehicle, configured to transport the residual product from the food stuff production facility 20 to the buffer tank 10 and dryer 30. The transport container 21, 31 may be configured to keep the residual product in an environment preventing microorganism contamination. In some embodiments, the transport container 21, 31 may comprise one or more buffer tanks similar to the buffer tank 10 described above.

The use of a transport container 21, 31 may enable residual product to be safely handled despite different location for production facility 20 and dryer 30, keeping the residual material in condition to be used for e.g. human food.

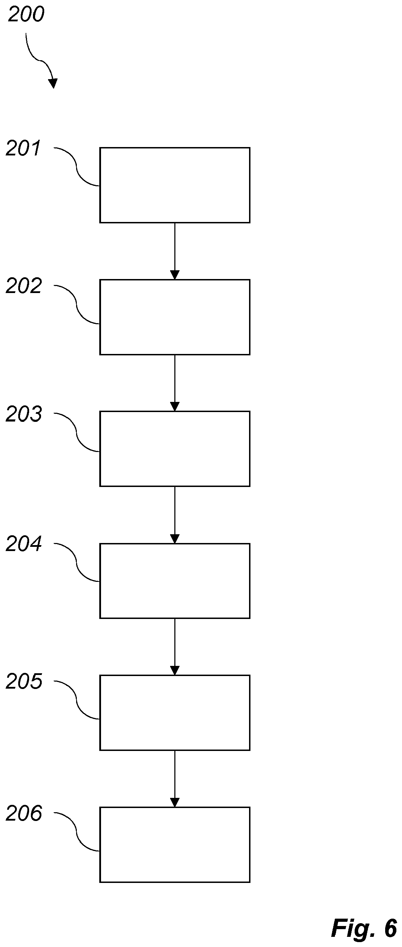

Fig. 6 illustrates a method 200 according to an embodiment of the invention. The method 200 comprises the steps of receiving 201 residual product from a plant-based food stuff production facility 20, wherein the residual product comprising 15-50% solid substances and 50-85% water. Further the received residual product is supplied 202 to a buffer tank 10 by inputting the residual product into a tank chamber 14 of the buffer tank through a residual product inlet 1. Heat is supplied 203 to the residual product in the tank chamber 14 to keep the residual product at a temperature between 65-95°C. The residual product is mixed 204 in the tank chamber 14 by means of one or more mixing blades 7, 9, 13. The residual product is extracted 205 from the buffer tank 10 through a tank outlet 2, and supplied 206 to a residual product dryer 30 configured to dry the residual product.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A method (200) of handling residual product from plant-based food stuff production, the method comprising the steps of
receiving (201) residual product from a plant-based food stuff production facility (20), the residual product comprising 15-50% solid substances and 50-85% water;
supplying (202) the received residual product to a buffer tank (10) by inputting the residual product into a tank chamber (14) of the buffer tank through a residual product inlet (1);
supplying (203) heat to the residual product in the tank chamber (14) to keep the residual product at a temperature between 65-95°C;
mixing (204) the residual product in the tank chamber (14) by means of one or more mixing blades (7, 9, 13);
extracting (205) residual product from the buffer tank (10) through a tank outlet (2);
supplying (206) the extracted residual product to a residual product dryer (30) configured to dry the residual product.

2. The method (200) according to claim 1, wherein the one or more mixing blades comprises at least one static blade (9) and at least one rotating blade (7, 13) arranged in the tank chamber (14).

3. The method (200) according to claim 2, wherein the at least one rotating blade comprises a scraper (13) configured to move along an inner surface of the tank chamber (14).

4. The method (200) according to any one of the preceding claims, wherein the heating means comprises a heat material inlet (3) and the step of supplying heat comprises supplying hot steam into the tank chamber (14) through the heat material inlet (3).

5. The method (200) according to any one of the preceding claims, wherein the heating means comprises a heating jacket arranged to the tank chamber (14) and/or to or in connection with the residual product inlet (1), and the step of supplying heat comprises supplying heat to the residual product by means of the heating jacket.

6. The method (200) according to any one of the preceding claims, wherein the heating means comprises a heat exchanger and the step of supplying heat comprises heating the residual product upstream of the tank chamber (14) by means of the heat exchanger.

7. The method (200) according to any one of the preceding claims, further comprising a step of heating the residual product to between 120-130°C upstream the tank chamber (14).

8. The method (200) according to any one of the preceding claims, further comprising a step of supplying compressed air into the tank chamber through a compressed air inlet (4).

9. The method (200) according to claim 8, wherein the compressed air is supplied to provide a pressure inside the tank chamber (14) of 0.1-0.5 bar.

10. The method (200) according to any one of claims 8-9, wherein the compressed is supplied during extraction of residual product through the tank outlet (2).

11. The method (200) according to any of the claims 8-10, wherein the compressed air is supplied as pulses of compressed air through the compressed air inlet (4).

12. The method (200) according to any one of the preceding claims, further comprising a step of transporting the residual product through a pipeline between the tank outlet (2) on the buffer tank (10) and the residual product dryer (30).

13. A residual product handling system (100) for handling residual product from plant-based food stuff production, the residual product handling system comprising,
a buffer tank (10) configured to receive residual product from a plant-based food stuff production facility (20), the buffer tank comprising:
a tank chamber (14);
a residual product inlet (1) for receiving residual product of a plant-based food stuff production to the tank chamber (14);
a residual product outlet (2) for extracting residual product from the buffer tank (10);
a heating means configured to supply heat to the residual product for heating the residual product to between 60-95°C; and
one or more mixing blades (7, 9, 13) configured to mix the residual product together in the tank chamber (14);
wherein the residual product handling system further comprises a residual product dryer (30) configured to dry the residual product extracted from the buffer tank (10).

14. The residual product handling system (100) according to claim 13, wherein the heating means comprises a heat material inlet (2) configured to supply hot steam into the tank chamber (14).

15. The residual product handling system according to claim 13 or 14, further comprising an air supplying means to supply compressed air into the tank chamber (14) through a compressed air inlet (3).
